# EUROPÄISCHE PATENTSCHRIFT

(11) **EP 4 526 582 B1**
(45) Veröffentlichungstag und Bekanntmachung des Hinweises auf die Patenterteilung: **08.07.2026**
(21) Anmeldenummer: 23727259.6
(22) Anmeldetag: 11.05.2023
(51) Int. Cl.: F16H 61/28, F16H 61/32

(54) **VERFAHREN ZUR KALIBRIERUNG EINES SCHALTGETRIEBES UND RECHENEINHEIT**
METHOD FOR CALIBRATING A TRANSMISSION, AND COMPUTING UNIT
PROCÉDÉ D'ÉTALONNAGE D'UNE BOÎTE DE VITESSES ET UNITÉ DE CALCUL

(30) Priorität: 16.05.2022 DE 102022204787
(43) Veröffentlichungstag der Anmeldung: 26.03.2025
(73) Patentinhaber: Robert Bosch GmbH, 70442 Stuttgart (DE)
(72) Erfinder: HELLEBRANDT, Marco, 44388 Dortmund (DE); WEIR, Dennis, 44135 Dortmund (DE); JERG, Matthias, 89233 Neu-Ulm (DE); GLAS, Jordi, 59423 Unna (DE)
(86) Internationale Anmeldenummer: PCT/EP2023/062574
(87) Internationale Veröffentlichungsnummer: WO 2023/222497

(56) Entgegenhaltungen:
- DE-A1- 102008 000 641

## Beschreibung

Die vorliegende Erfindung betrifft ein Verfahren zur Kalibrierung eines Schaltgetriebes sowie eine Recheneinheit und ein Computerprogramm zu dessen Durchführung, sowie einen Computerlesbaren Datenträger.

### Hintergrund der Erfindung

Bei mobilen Arbeitsmaschinen können Schaltgetriebe mit zwei Gängen verwendet werden. Aufgrund hoher zu übertragender Drehmomente ist für eine ordnungsgemäße Funktion mit möglichst wenig Verschleiß eine genaue Einstellung wünschenswert. Insbesondere sollte einem mittels eines elektrischen Motors angetriebenen Schaltaktor bzw. dessen Steuerung nach einem Zündungsreset mitgeteilt werden, an welcher Position sich der Schaltaktor gerade mechanisch befindet, da im Allgemeinen einem Rotorwinkel des elektrischen Motors mehrere Positionen des Schaltaktors entsprechen.

Ein Verfahren zur Kalibrierung eines Schaltgetriebes gemäß dem Stand der Technik ist in dem Dokument DE 10 2008 000 641 A1 offenbart.

### Offenbarung der Erfindung

Erfindungsgemäß werden ein Verfahren zur Kalibrierung eines Schaltgetriebes nach Anspruch 1, eine Recheneinheit nach Anspruch 7, sowie ein Computerprogramm nach Anspruch 8 und ein Computerlesbarer Datenträger nach Anspruch 9 vorgeschlagen.

Vorteilhafte Ausgestaltungen sind Gegenstand der Unteransprüche sowie der nachfolgenden Beschreibung.

Die Erfindung betrifft ein Schaltgetriebe mit mindestens zwei Gängen, in dem ein Aktor (Schaltaktor bzw. Getriebeaktor) in einem Aktorbereich zwischen zwei Endanschlägen bewegbar ist, wobei Teilbereiche des Aktorbereichs den Gängen entsprechen. Die Erfindung bedient sich der Maßnahme zu bestimmen, welcher Gang des Schaltgetriebes eingelegt ist und abhängig vom eingelegten Gang eine Stellgröße des Antriebs des Aktors so zu ändern, dass der Aktor an einem Endanschlag, der im Teilbereich eingeschlossen ist, der dem eingelegten Gang entspricht, zum Anliegen kommt bzw. anschlägt. Wenn sich der Aktor am Endanschlag befindet, wird der entsprechende Endwert der Stellgröße erfasst und basierend auf dem erfassten Endwert eine Korrespondenz zwischen Werten der Stellgröße und Aktorpositionen angepasst. Dies kann als Teil-Kalibrierung bzw. Schnell-Kalibrierung angesehen werden. Eine solche Kalibrierung ist vorteilhaft, da kein Gangwechsel notwendig ist, so dass kein zusätzlicher Verschleiß auftritt und die Kalibrierung schnell durchgeführt werden kann. Zudem kann die Teil-Kalibrierung unabhängig von weiteren Komponenten im Antriebsstrang durchgeführt werden, so dass das Schaltgetriebe nicht auf die Freigabe aller Antriebskomponenten warten muss. Insgesamt ist das Schaltgetriebe somit schneller einsatzbereit.

Eine erfindungsgemäße Recheneinheit, z.B. ein Steuergerät eines Schaltgetriebes oder einer Maschine, in der das Schaltgetriebe eingebaut ist, ist, insbesondere programmtechnisch, dazu eingerichtet, das erfindungsgemäße Verfahren durchzuführen.

Auch die Implementierung des erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welcher durch die nachfolgenden Ansprüche definiert wird, zu verlassen.

Die Erfindung ist anhand von Ausführungsbeispielen in der Zeichnung schematisch dargestellt und wird im Folgenden unter Bezugnahme auf die Zeichnung ausführlich beschrieben. Figurenbeschreibung
Figur 1 zeigt schematisch eine Anordnung mit Endanschlägen und einem Aktor eines Schaltgetriebes, anhand derer der Zusammenhang zwischen einem Aktorbereich, Endanschlägen und Gängen erläutert wird.
Figur 2 zeigt ein Ablaufdiagramm gemäß einer bevorzugten Ausführungsform.

### Detaillierte Beschreibung der Zeichnung

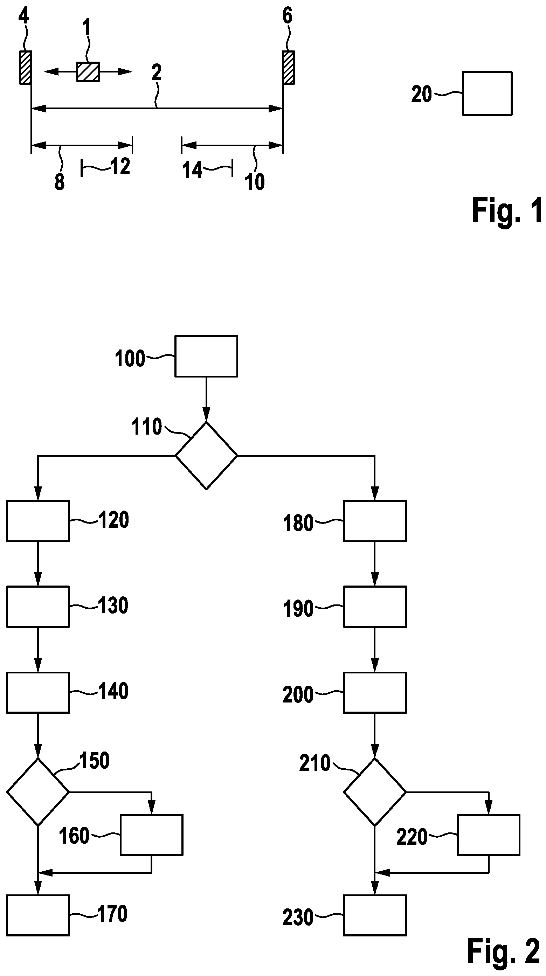

Figur 1 skizziert den Zusammenhang zwischen einem Aktorbereich 2, Endanschlägen 4, 6 und Gängen eines Schaltgetriebes bzw. Schaltgetriebes. Der Aktor 1 ist zwischen einem ersten Endanschlag 4 und einem zweiten Endanschlag 6, die eine bestimme Distanz aufweisen, bewegbar. Die Distanz zwischen den Endanschlägen kann z.B. in einer vollständigen Kalibrierung bestimmt werden. Befindet sich der Aktor in einem ersten Teilbereich 8 des Aktorbereichs 2, ist ein erster Gang eingelegt. Der erste Teilbereich 8 schließt die als erste Endposition bezeichnete Position ein, in der der Aktor am ersten Endanschlag 4 anschlägt bzw. anliegt. Befindet sich der Aktor in einem zweiten Teilbereich 10 des Aktorbereichs 2, ist ein zweiter Gang eingelegt. Der zweite Teilbereich 10 schließt die als zweite Endposition bezeichnete Position ein, in der der Aktor am zweiten Endanschlag 6 anschlägt bzw. anliegt. Der erste Teilbereich 8 schließt eine erste Sollposition 12 ein, an der sich der Aktor idealerweise befinden sollte, wenn der erste Gang eingelegt ist. Der zweite Teilbereich 10 schließt eine zweite Sollposition 14 ein, an der sich der Aktor 1 idealerweise befinden sollte, wenn der zweite Gang eingelegt ist. Anders als gezeigt, können die beiden Teilbereiche 8 und 10 auch aneinander angrenzen.

Der Aktor 1 wird durch einen elektrischen Antrieb (nicht dargestellt), insbesondere elektromagnetischen Antrieb bzw. Elektromotor, angetrieben bzw. betätigt. Soll eine gewünschte Position des Aktors eingestellt werden, wird der elektrische Antrieb angesteuert, um die gewünschte Position zu erreichen. Dazu müssen jedoch die Startposition und der Zusammenhang zwischen Aktorbewegung und Antriebsbewegung bekannt sein. Bei einer Kalibrierung des Aktors können insbesondere diese Parameter ermittelt werden, z.B. durch Fahren des Aktors an die Anschläge, so dass dann ausgehend von dort die jeweils aktuelle Position ermittelbar ist.

Weiterhin ist eine Recheneinheit 20 eingezeichnet, die zur Steuerung des Schaltgetriebes dient. Die Recheneinheit 20 ist insbesondere dazu eingerichtet, den Antrieb des Aktors anzusteuern (z.B. über nicht weiter dargestellte Steuerleitungen). Auch kann vorgesehen sein, dass die Recheneinheit 20 Positionsdaten eines Positionssensors für den Aktor oder Positionsdaten (z.B. Winkelpositionsdaten bzw. Drehzahl des Antriebs) erfasst.

Bei einer vollständigen Kalibrierung wird der Aktor 1 so verfahren, dass er zunächst an einem der Endanschläge anschlägt und anschließend am anderen Endanschlag anschlägt. Die bekannte Distanz dazwischen (Aktorbewegung) kann mit der Antriebsbewegung (z.B. Umdrehungen des Motors o.ä.) in Korrespondenz gebracht werden, so dass später die jeweils aktuelle Aktorposition bestimmbar ist. Bei einer vollständigen Kalibrierung wird somit insbesondere auch eine Korrespondenz zwischen einer Positionsänderung des Aktors und einer Positionsänderung des Antriebs ermittelt.

Diese vollständige Kalibrierung schließt ein Schalten durch beide Gänge ein. Vorteilhaft ist jedoch vorliegend vorgesehen, nur eine Teil-Kalibrierung durchzuführen, bei der lediglich einer der Endanschläge angefahren und ein Schalten vermieden wird. Dieses Vorgehen wird anhand der Figur 2, die ein Ablaufdiagramm gemäß einer bevorzugten Ausführungsform zeigt, erläutert.

Im bevorzugten Schritt 100 erfolgt eine (initiale) vollständige Kalibrierung, wie vorstehend beschrieben. Diese vollständige Kalibrierung erfolgt beispielsweise unmittelbar nach Fertigstellung des Schaltgetriebes. Die erfassten Endwerte der Stellgröße werden gespeichert, z.B. in einem Steuergerät, das eingerichtet ist, das Verfahren durchzuführen. Es sind also ein Endwert für die erste Endposition und ein Endwert für die zweite Endposition und eine (initiale) Korrespondenz zwischen Positionsänderung des Aktors und Positionsänderung des Antriebs bekannt bzw. gespeichert. Bei jeder späteren ggf. durchgeführten vollständigen Kalibrierung (siehe unten) werden diese gespeicherten Werte zweckmäßigerweise durch aktuelle Werte ersetzt.

Die weiteren Verfahrensschritte erfolgen vorzugsweise während des normalen Betriebs (z.B. an bestimmten Zeitpunkten oder in bestimmten Zeitintervallen) und/oder bei Start einer Maschine, in die das Schaltgetriebe eingebaut ist.

In Schritt 110 wird bestimmt, welcher Gang eingelegt ist. Dies kann durch Auswerten eines Gangsignals eines Getriebesensors oder eines Positionssignals eines Positionssensors, der die Position des Aktors oder eines durch diesen bewegten Bauelements erfasst, erfolgen.

Wenn der erste Gang eingelegt ist (z.B. zeigt das Gangsignal an, dass der erste Gang eingelegt ist, bzw. das Positionssignal an, dass sich der Aktor im ersten Teilbereich 8 befindet), wird in Schritt 120 der Antrieb angesteuert, bis der Aktor am ersten Endanschlag 4 zum Anliegen kommt, und der entsprechende Wert als Position des Aktors festgelegt. Die Richtung, in die der Antrieb bewegt werden muss, um den Aktor zum ersten Endanschlag 4 zu bewegen, ist bekannt, da der prinzipielle funktionale Zusammenhang zwischen Antriebsbewegung und Aktorposition bekannt ist. Ein Wechseln des Ganges tritt also nicht auf. Ausgehend von diesem Endanschlag 4 können alle weiteren Positionen unter Verwendung der hinterlegten Korrespondenz zwischen Positionsänderung des Aktors und Positionsänderung des Antriebs angefahren werden.

In einem bevorzugten Schritt 130 wird anschließend die erste Sollposition 12 angefahren. Dies erfolgt unmittelbar nach dem Anfahren des ersten Anschlags, also insbesondere ohne zwischenzeitlich den zweiten Endanschlag anzufahren.

Bevorzugt erfolgt zu einem späteren Zeitpunkt, nachdem während des normalen Betriebs in den anderen Gang, d.h. in den zweiten Gang, geschaltet wurde (z.B. feststellbar anhand des Gangsignals und/oder mittels des Positionssensors), eine Überprüfung der Teil-Kalibrierung (bevorzugte Schritte 140 bis 170). Dazu wird in Schritt 140 der Antrieb angesteuert, bis der Aktor am zweiten Endanschlag 6 zum Anliegen kommt, und die entsprechende Position aus der Position des ersten Endanschlags 4, der Antriebsbewegung und der hinterlegten Korrespondenz ermittelt. In Schritt 150 wird geprüft, ob eine erste Abweichung (genauer der Betrag der ersten Abweichung) der ermittelten Position von einer erwarteten Position (d.h. die Position, die erwartet wird, wenn der Aktor ausgehend vom ersten Endanschlag über die vorbekannte Distanz zum zweiten Endanschlag verfahren wird) über einer ersten Schwelle liegt (die erste Schwelle, wie auch die weiter unten genannte zweite Schwelle, kann als Absolutwert oder als relative Abweichung angegeben sein.

Wenn dies der Fall ist, erfolgt in Schritt 160 eine vollständige Kalibrierung (z.B. wie oben beschrieben). Vorzugsweise wird der Aktor anschließend in Schritt 170 in die zweite Sollposition bewegt. Wenn die erste Abweichung nicht über der ersten Schwelle liegt, kann Schritt 170 unmittelbar nach Schritt 150 erfolgen.

Die Schritte 140 bis 170 werden vorzugsweise nur dann durchgeführt, wenn das Schaltgetriebe momentenfrei ist, wenn also kein Drehmoment vom Schaltgetriebe übertragen wird, z.B. bei Stillstand der Maschine, in der das Schaltgetriebe verwendet wird.

Wenn in Schritt 110 bestimmt wird, dass der zweite Gang eingelegt ist (z.B. zeigt das Gangsignal an, dass der zweite Gang eingelegt ist, bzw. das Positionssignal an, dass sich der Aktor im zweiten Teilbereich 10 befindet), wird in Schritt 180 der Antrieb angesteuert, bis der Aktor 1 am zweiten Endanschlag 6 zum Anliegen kommt, und der entsprechende Wert als Position des Aktors festgelegt. Die Richtung, in die der Antrieb bewegt werden muss, um den Aktor 1 zum zweiten Endanschlag 6 zu bewegen, ist bekannt, da der prinzipielle funktionale Zusammenhang zwischen Antriebsbewegung und Aktorposition bekannt ist. Ein Wechseln des Ganges tritt also nicht auf. Ausgehend von diesem Endanschlag 6 können alle weiteren Position unter Verwendung der hinterlegten Korrespondenz zwischen Positionsänderung des Aktors und Positionsänderung des Antriebs angefahren werden.

In einem bevorzugten Schritt 190 wird die zweite Sollposition 14 angefahren. Dies erfolgt unmittelbar nach dem Anfahren des zweiten Endanschlags, also insbesondere ohne zwischenzeitlich den ersten Endanschlag anzufahren.

Bevorzugt erfolgt zu einem späteren Zeitpunkt, nachdem während des normalen Betriebs in den anderen Gang, d.h. in den ersten Gang, geschaltet wurde (z.B. feststellbar anhand des Gangsignals und/oder mittels des Positionssensors), eine Überprüfung der Teil-Kalibrierung (bevorzugte Schritte 200 bis 230). Dazu wird in Schritt 200 der Antrieb angesteuert, bis der Aktor am ersten Endanschlag 4 zum Anliegen kommt, und die entsprechende Position aus der Position des zweiten Endanschlags 6, der Antriebsbewegung und der hinterlegten Korrespondenz ermittelt. In Schritt 210 wird geprüft, ob eine zweite Abweichung (genauer der Betrag der zweiten Abweichung) der ermittelten Position von einer erwarteten Position (d.h. die Position, die erwartet wird, wenn der Aktor ausgehend vom zweiten Endanschlag über die vorbekannte Distanz zum ersten Endanschlag verfahren wird) über einer zweiten Schwelle liegt (die gleich der ersten Schwelle sein kann).

Wenn dies der Fall ist, erfolgt in Schritt 220 eine vollständige Kalibrierung (z.B. wie oben beschrieben). Vorzugsweise wird der Aktor anschließend in Schritt 230 in die erste Sollposition bewegt. Wenn die zweite Abweichung nicht über der zweiten Schwelle liegt, kann Schritt 230 unmittelbar nach Schritt 210 erfolgen.

Die Schritte 200 bis 230 werden vorzugsweise nur dann durchgeführt, wenn das Schaltgetriebe momentenfrei ist, wenn also kein Drehmoment vom Schaltgetriebe übertragen wird, z.B. bei Stillstand der Maschine, in der das Schaltgetriebe verwendet wird.

## Patentansprüche

1. Verfahren zur Kalibrierung eines Schaltgetriebes mit einem elektrisch angetriebenen Aktor (1), das einen ersten und einen zweiten Gang aufweist, wobei das Schaltgetriebe einen ersten und einen zweiten Endanschlag (4, 6) aufweist, zwischen denen sich ein Aktorbereich (2) erstreckt, in dem der Aktor bewegbar ist, wobei der erste Gang eingelegt ist, wenn sich der Aktor in einem ersten Teilbereich (8), der den ersten Endanschlag einschließt, des Aktorbereichs befindet, und der zweite Gang eingelegt ist, wenn sich der Aktor in einem zweiten Teilbereich (10), der den zweiten Endanschlag einschließt, des Aktorbereichs befindet, wobei ein elektrischer Antrieb des Aktors angesteuert wird, um den Aktor in dem Aktorbereich (2) zu bewegen;
wobei das Verfahren eine Teil-Kalibrierung umfasst, die die folgenden Schritte einschließt:
Bestimmen (110), welcher Gang eingelegt ist;
wenn bestimmt wurde, dass der erste Gang eingelegt ist, Ansteuern (120) des Antriebs, bis sich der Aktor am ersten Endanschlag (4) befindet, und Bewegen des Aktors ausgehend vom ersten Endanschlag unter Verwendung einer hinterlegten Korrespondenz zwischen einer Positionsänderung des Aktors und einer Positionsänderung des Antriebs; und
wenn bestimmt wurde, dass der zweite Gang eingelegt ist, Ansteuern (160) des Antriebs, bis sich der Aktor am zweiten Endanschlag (6) befindet, und Bewegen des Aktors ausgehend vom zweiten Endanschlag unter Verwendung der hinterlegten Korrespondenz zwischen einer Positionsänderung des Aktors und einer Positionsänderung des Antriebs; **dadurch gekennzeichnet, dass**
wenn in der Teil-Kalibrierung bestimmt wurde, dass der erste Gang eingelegt ist, nach der Teil-Kalibrierung, nachdem zu einem späteren Zeitpunkt der zweite Gang eingelegt wurde, das Verfahren weiterhin die folgenden Schritte umfasst:
Ansteuern (140) des Antriebs, bis sich der Aktor am zweiten Endanschlag (6) befindet und Ermitteln einer Position des zweiten Endanschlags (6);
Prüfen (150), ob eine erste Abweichung der ermittelten Position des zweiten Endanschlags (6) von einer aufgrund der Korrespondenz zwischen einer Positionsänderung des Aktors und einer Positionsänderung des Antriebs erwarteten Position des zweiten Endanschlags (6) über einer ersten Schwelle liegt;
wenn die erste Abweichung über der ersten Schwelle liegt, Durchführen einer vollständigen Kalibrierung (160);
wobei nach der vollständigen Kalibrierung der Aktor vorzugsweise in eine zweite Sollposition (14) im zweiten Teilbereich (10) bewegt wird (170) oder dass
wenn in der Teil-Kalibrierung bestimmt wurde, dass der zweite Gang eingelegt ist, nach der Teil-Kalibrierung, nachdem zu einem späteren Zeitpunkt der erste Gang eingelegt wurde, das Verfahren weiterhin die folgenden Schritte umfasst:
Ansteuern (200) des Antriebs, bis sich der Aktor am ersten Endanschlag (4) befindet und Erfassen eines entsprechenden Werts des Antriebs;
Prüfen (210), ob eine zweite Abweichung des erfassten Werts des Antriebs von einem aufgrund der Korrespondenz zwischen einer Positionsänderung des Aktors und einer Positionsänderung des Antriebs erwarteten Wert des Antriebs über einer zweiten Schwelle liegt;
wenn die zweite Abweichung über der zweiten Schwelle liegt, Durchführen einer vollständigen Kalibrierung (220);
wobei nach der vollständigen Kalibrierung der Aktor vorzugsweise in eine erste Sollposition (12) im ersten Teilbereich (8) bewegt wird (230).

2. Verfahren nach Anspruch 1, wobei eine initiale vollständige Kalibrierung (100) erfolgt, insbesondere bei Fertigstellung des Schaltgetriebes oder Einbau des Schaltgetriebes in eine Maschine.

3. Verfahren nach einem der Ansprüche 1 oder 2, wobei in der vollständigen Kalibrierung (100, 160, 220) der Antrieb angesteuert wird, den Aktor zu bewegen, bis er an einem der Endanschläge (4, 6) anliegt, und einen entsprechenden ersten Wert des Antriebs zu erfassen, wenn der Aktor an dem einen der Endanschläge anliegt, und anschließend zu bewegen, bis er an dem anderen der Endschläge (4, 6) anliegt, und einen entsprechenden ersten Wert des Antriebs zu erfassen; und wobei die hinterlegte Korrespondenz zwischen einer Positionsänderung des Aktors und einer Positionsänderung des Antriebs basierend auf dem ersten und dem zweiten Wert neu bestimmt wird bzw. initial festgelegt wird.

4. Verfahren nach einem der vorstehenden Ansprüche, wobei die Teil-Kalibrierung weiterhin die folgenden Schritte umfasst:
wenn bestimmt wurde, dass der erste Gang eingelegt ist, Bewegen (130) des Aktors in eine erste Sollposition (12) im ersten Teilbereich (8), wobei das Bewegen (130) des Aktors in die erste Sollposition (12) unmittelbar nach dem Anfahren des ersten Anschlags erfolgt; oder
wenn bestimmt wurde, dass der zweite Gang eingelegt ist, Bewegen (190) des Aktors in eine zweite Sollposition (14) im zweiten Teilbereich (10), wobei das Bewegen (190) des Aktors in die zweite Sollposition (14) unmittelbar nach dem Anfahren des zweiten Anschlags erfolgt.

5. Verfahren nach einem der vorstehenden Ansprüche, wobei beim Bestimmen (110), welcher Gang eingelegt ist, ein Signal eines Positionssensors oder Gangsensors erfasst und ausgewertet wird.

6. Verfahren nach einem der vorstehenden Ansprüche, wobei die Schritte des Verfahrens mit Start einer Maschine durchgeführt werden, in der das Schaltgetriebe eingebaut ist, und/oder wobei die Schritte des Verfahrens nach dem Start während des Betriebs der Maschine an bestimmten Zeitpunkten durchgeführt werden, insbesondere an regelmäßigen Zeitpunkten.

7. Recheneinheit (20) zur Steuerung eines Schaltgetriebes mit einem elektrisch angetriebenen Aktor (1), das einen ersten und einen zweiten Gang aufweist, wobei das Schaltgetriebe einen ersten und einen zweiten Endanschlag (4, 6) aufweist, zwischen denen sich ein Aktorbereich (2) erstreckt, in dem der Aktor bewegbar ist, wobei der erste Gang eingelegt ist, wenn sich der Aktor in einem ersten Teilbereich (8), der den ersten Endanschlag einschließt, des Aktorbereichs befindet, und der zweite Gang eingelegt ist, wenn sich der Aktor in einem zweiten Teilbereich (10), der den zweiten Endanschlag einschließt, des Aktorbereichs befindet, wobei ein elektrischer Antrieb des Aktors angesteuert wird, um den Aktor in dem Aktorbereich (2) zu bewegen;
wobei die Recheneinheit einen Prozessor umfasst, der so konfiguriert ist, dass er die Schritte des Verfahrens nach einem der vorstehenden Ansprüche ausführt.

8. Computerprogramm umfassend Befehle, die bei der Ausführung des Programms durch einen Computer diesen veranlassen, die Schritte des Verfahrens nach Anspruch 1 bis 6 auszuführen.

9. Computerlesbarer Datenträger, auf dem das Computerprogramm nach Anspruch 8 gespeichert ist.

## Claims

1. A method for calibrating a gearbox with an electrically driven actuator (1), which has a first and a second gear, wherein the gearbox has a first and a second end stop (4, 6), between which an actuator area (2) extends, in which the actuator is movable,
wherein the first gear is engaged when the actuator is in a first partial area (8), which includes the first end stop, of the actuator area, and the second gear is engaged when the actuator is in a second partial area (10), which includes the second end stop, of the actuator area, wherein an electric drive of the actuator is controlled to move the actuator in the actuator area (2);
wherein the method comprises a partial calibration which includes the following steps:
determining (110) which gear is engaged;
if it has been determined that the first gear is engaged, controlling (120) the drive until the actuator is at the first end stop (4), and moving the actuator starting from the first end stop using a stored correspondence between a change in position of the actuator and a change in position of the drive; and
if it has been determined that the second gear is engaged, controlling (160) the drive until the actuator is at the second end stop (6), and moving the actuator starting from the second end stop using the stored correspondence between a change in position of the actuator and a change in position of the drive;
**characterized in that**
if it has been determined in the partial calibration that the first gear is engaged, after the partial calibration, after the second gear has been engaged at a later point in time, the method further comprises the following steps:
controlling (140) the drive until the actuator is at the second end stop (6) and determining a position of the second end stop (6);
checking (150) whether a first deviation of the determined position of the second end stop (6) from a position of the second end stop (6) expected on the basis of the correspondence between a change in position of the actuator and a change in position of the drive is above a first threshold;
if the first deviation is above the first threshold, performing a full calibration (160); wherein after the full calibration, the actuator is preferably moved to a second target position (14) in the second partial area (10) (170)
or that
if it has been determined in the partial calibration that the second gear is engaged, after the partial calibration, after the first gear has been engaged at a later point in time, the method further comprises the following steps:
controlling (200) the drive until the actuator is at the first end stop (4) and detecting a corresponding value of the drive;
checking (210) whether a second deviation of the detected value of the drive from a value of the drive expected on the basis of the correspondence between a change in position of the actuator and a change in position of the drive is above a second threshold;
if the second deviation is above the second threshold, performing a full calibration (220);
wherein after the full calibration, the actuator is preferably moved to a first target position (12) in the first partial area (8) (230).

2. The method according to claim 1, wherein an initial full calibration (100) is performed, in particular upon completion of the gearbox or installation of the gearbox in a machine.

3. The method according to any one of claims 1 or 2, wherein in the full calibration (100, 160, 220) the drive is controlled to move the actuator until it abuts one of the end stops (4, 6), and to detect a corresponding first value of the drive when the actuator abuts the one of the end stops, and subsequently to move it until it abuts the other of the end stops (4, 6), and to detect a corresponding first value of the drive; and wherein the stored correspondence between a change in position of the actuator and a change in position of the drive is redetermined or initially determined based on the first and the second value.

4. The method according to any one of the preceding claims, wherein the partial calibration further comprises the following steps:
if it has been determined that the first gear is engaged, moving (130) the actuator to a first target position (12) in the first partial area (8), wherein the movement (130) of the actuator to the first target position (12) takes place immediately after approaching the first stop; or
if it has been determined that the second gear is engaged, moving (190) the actuator to a second target position (14) in the second partial area (10), wherein the movement (190) of the actuator to the second target position (14) takes place immediately after approaching the second stop.

5. The method according to any one of the preceding claims, wherein, when determining (110) which gear is engaged, a signal from a position sensor or gear sensor is detected and evaluated.

6. The method according to any one of the preceding claims, wherein the steps of the method are carried out with the start of a machine in which the gearbox is installed, and/or wherein the steps of the method are carried out after the start during operation of the machine at specific times, in particular at regular times.

7. A control unit (20) for controlling a gearbox with an electrically driven actuator (1), which has a first and a second gear, wherein the gearbox has a first and a second end stop (4, 6), between which an actuator area (2) extends, in which the actuator is movable, wherein the first gear is engaged when the actuator is in a first partial area (8), which includes the first end stop, of the actuator area, and the second gear is engaged when the actuator is in a second partial area (10), which includes the second end stop, of the actuator area, wherein an electric drive of the actuator is controlled to move the actuator in the actuator area (2);
wherein the control unit comprises a processor which is configured to carry out the steps of the method according to any one of the preceding claims.

8. A computer program comprising instructions which, when the program is executed by a computer, cause the computer to carry out the steps of the method according to any one of claims 1 to 6.

9. A computer-readable data carrier on which the computer program according to claim 8 is stored.

## Revendications

1. Procédé pour l'étalonnage d'une boîte de vitesses avec un actionneur (1) à entraînement électrique, qui présente une première et une deuxième vitesse, dans lequel la boîte de vitesses présente une première et une deuxième butée d'extrémité (4, 6), entre lesquelles s'étend une zone d'actionneur (2) dans laquelle l'actionneur est mobile, dans lequel la première vitesse est engagée lorsque l'actionneur se trouve dans une première zone partielle (8), qui inclut la première butée d'extrémité, de la zone d'actionneur, et la deuxième vitesse est engagée lorsque l'actionneur se trouve dans une deuxième zone partielle (10), qui inclut la deuxième butée d'extrémité, de la zone d'actionneur, dans lequel un entraînement électrique de l'actionneur est commandé pour déplacer l'actionneur dans la zone d'actionneur (2) ; dans lequel le procédé comprend un étalonnage partiel qui inclut les étapes suivantes :
déterminer (110) quelle vitesse est engagée ;
s'il a été déterminé que la première vitesse est engagée, commander (120) l'entraînement jusqu'à ce que l'actionneur se trouve au niveau de la première butée d'extrémité (4), et déplacer l'actionneur à partir de la première butée d'extrémité en utilisant une correspondance mémorisée entre un changement de position de l'actionneur et un changement de position de l'entraînement ; et
s'il a été déterminé que la deuxième vitesse est engagée, commander (160) l'entraînement jusqu'à ce que l'actionneur se trouve au niveau de la deuxième butée d'extrémité (6), et déplacer l'actionneur à partir de la deuxième butée d'extrémité en utilisant la correspondance mémorisée entre un changement de position de l'actionneur et un changement de position de l'entraînement ;
**caractérisé en ce que**
si, lors de l'étalonnage partiel, il a été déterminé que la première vitesse est engagée, après l'étalonnage partiel, après que la deuxième vitesse a été engagée à un moment ultérieur, le procédé comprend en outre les étapes suivantes :
commander (140) l'entraînement jusqu'à ce que l'actionneur se trouve au niveau de la deuxième butée d'extrémité (6) et déterminer une position de la deuxième butée d'extrémité (6) ;
vérifier (150) si un premier écart de la position déterminée de la deuxième butée d'extrémité (6) par rapport à une position de la deuxième butée d'extrémité (6) attendue sur la base de la correspondance entre un changement de position de l'actionneur et un changement de position de l'entraînement est supérieur à un premier seuil ;
si le premier écart est supérieur au premier seuil, effectuer un étalonnage complet (160) ;
dans lequel, après l'étalonnage complet, l'actionneur est déplacé de préférence dans une deuxième position de consigne (14) dans la deuxième zone partielle (10) (170) ou **en ce que**
si, lors de l'étalonnage partiel, il a été déterminé que la deuxième vitesse est engagée, après l'étalonnage partiel, après que la première vitesse a été engagée à un moment ultérieur, le procédé comprend en outre les étapes suivantes :
commander (200) l'entraînement jusqu'à ce que l'actionneur se trouve au niveau de la première butée d'extrémité (4) et détecter une valeur correspondante de l'entraînement ;
vérifier (210) si un deuxième écart de la valeur détectée de l'entraînement par rapport à une valeur de l'entraînement attendue sur la base de la correspondance entre un changement de position de l'actionneur et un changement de position de l'entraînement est supérieur à un deuxième seuil ;
si le deuxième écart est supérieur au deuxième seuil, effectuer un étalonnage complet (220) ;
dans lequel, après l'étalonnage complet, l'actionneur est déplacé de préférence dans une première position de consigne (12) dans la première zone partielle (8) (230).

2. Procédé selon la revendication 1, dans lequel un étalonnage complet initial (100) est effectué, en particulier lors de la fabrication de la boîte de vitesses ou de l'installation de la boîte de vitesses dans une machine.

3. Procédé selon l'une des revendications 1 ou 2, dans lequel, lors de l'étalonnage complet (100, 160, 220), l'entraînement est commandé pour déplacer l'actionneur jusqu'à ce qu'il vienne en butée contre l'une des butées d'extrémité (4, 6), et pour détecter une première valeur correspondante de l'entraînement lorsque l'actionneur vient en butée contre l'une des butées d'extrémité, puis pour le déplacer jusqu'à ce qu'il vienne en butée contre l'autre des butées d'extrémité (4, 6), et pour détecter une première valeur correspondante de l'entraînement ; et dans lequel la correspondance mémorisée entre un changement de position de l'actionneur et un changement de position de l'entraînement est redéterminée ou déterminée initialement sur la base de la première et de la deuxième valeur.

4. Procédé selon l'une des revendications précédentes, dans lequel l'étalonnage partiel comprend en outre les étapes suivantes :
s'il a été déterminé que la première vitesse est engagée, déplacer (130) l'actionneur dans une première position de consigne (12) dans la première zone partielle (8),
dans lequel le déplacement (130) de l'actionneur dans la première position de consigne (12) a lieu immédiatement après l'approche de la première butée ; ou
s'il a été déterminé que la deuxième vitesse est engagée, déplacer (190) l'actionneur dans une deuxième position de consigne (14) dans la deuxième zone partielle (10),
dans lequel le déplacement (190) de l'actionneur dans la deuxième position de consigne (14) a lieu immédiatement après l'approche de la deuxième butée.

5. Procédé selon l'une des revendications précédentes, dans lequel, lors de la détermination (110) de la vitesse engagée, un signal d'un capteur de position ou d'un capteur de vitesse est détecté et évalué.

6. Procédé selon l'une des revendications précédentes, dans lequel les étapes du procédé sont effectuées au démarrage d'une machine dans laquelle la boîte de vitesses est installée, et/ou dans lequel les étapes du procédé sont effectuées après le démarrage pendant le fonctionnement de la machine à des moments déterminés, en particulier à des moments réguliers.

7. Unité de commande (20) pour commander une boîte de vitesses avec un actionneur (1) à entraînement électrique, qui présente une première et une deuxième vitesse, dans lequel la boîte de vitesses présente une première et une deuxième butée d'extrémité (4, 6), entre lesquelles s'étend une zone d'actionneur (2) dans laquelle l'actionneur est mobile, dans lequel la première vitesse est engagée lorsque l'actionneur se trouve dans une première zone partielle (8), qui inclut la première butée d'extrémité, de la zone d'actionneur, et la deuxième vitesse est engagée lorsque l'actionneur se trouve dans une deuxième zone partielle (10), qui inclut la deuxième butée d'extrémité, de la zone d'actionneur, dans lequel un entraînement électrique de l'actionneur est commandé pour déplacer l'actionneur dans la zone d'actionneur (2) ;
dans laquelle l'unité de commande comprend un processeur qui est configuré pour exécuter les étapes du procédé selon l'une des revendications précédentes.

8. Programme d'ordinateur comprenant des instructions qui, lorsque le programme est exécuté par un ordinateur, amènent l'ordinateur à exécuter les étapes du procédé selon l'une des revendications 1 à 6.

9. Support de données lisible par ordinateur sur lequel le programme d'ordinateur selon la revendication 8 est mémorisé.
